# EUROPEAN PATENT SPECIFICATION

(11) **EP 3 211 431 B1**
(45) Date of publication and mention of the grant of the patent: **12.10.2022**
(21) Application number: 16157591.5
(22) Date of filing: 26.02.2016
(51) Int. Cl.: G01N 35/04

(54) **TRANSPORT DEVICE FOR A LABORATORY SAMPLE DISTRIBUTION SYSTEM COMPRISING A PLURALITY OF ACTUATOR MODULES MOUNTED IN A GRID PATTERN**
TRANSPORTVORRICHTUNG FÜR EIN LABORPROBENVERTEILUNGSSYSTEM MIT MEHREREN AKTUATORMODULEN, DIE IN EINEM NETZMUSTER MONTIERT WERDEN
DISPOSITIF DE TRANSPORT POUR UN SYSTÈME DE DISTRIBUTION D'ÉCHANTILLONS EN LABORATOIRE COMPRENANT UNE PLURALITÉ DE MODULES D'ACTIONNEURS MONTÉS EN MOTIF DE GRILLE

(43) Date of publication of application: 30.08.2017
(73) Proprietor: Roche Diagnostics GmbH, 68305 Mannheim (DE); F. Hoffmann-La Roche AG, 4070 Basel (CH)
(72) Inventor: KÄPPELI, Marcel, 5634 Merenschwand (CH)
(74) Representative: Patentanwälte Ruff, Wilhelm, Beier, Dauster & Partner mbB

(56) References cited:
- EP-A1- 2 022 736
- WO-A1-2013/064656
- US-A1- 2015 276 776

## Description

### TECHNICAL FIELD AND PRIOR ART

The invention relates to a transport device comprising a plurality of actuator modules and a device for mounting said plurality of actuator modules in a grid pattern to a support frame. Further, the invention relates to a laboratory sample distribution system and to a laboratory automation system comprising a laboratory sample distribution system.

A laboratory automation system comprises a plurality of pre-analytical, analytical and/or post-analytical stations, in which samples, for example blood, saliva, swab and other specimens taken from the human body, are processed. It is generally known to provide various containers, such as test tubes or vials, containing the samples. The test tubes are also referred to as sample tubes. In the context of the application, containers such as test tubes or vials for containing a sample are referred to as sample containers.

WO 2013/064656 A1 discloses a laboratory sample distribution system with a transport device comprising a transport plane or driving surface and a plurality of electro-magnetic actuators being stationary arranged below said driving surface, and with a plurality of sample containers comprising a magnetically active device, preferably at least one permanent magnet, wherein said electromagnetic actuators are adapted to move a sample container carrier placed on top of said driving surface by applying a magnetic force to said sample container carrier. The sample container carriers have a retaining area for retaining sample containers, so that sample containers can be placed in an upright or vertical position in the sample container carriers.

EP 2 022 736 A1 shows a shuttle-type conveying system provided with a feeding and collecting device, a pickup device for taking out a microplate and placing it on a receiving/delivery table, and a conveying device for feeding the microplate to another receiving/delivery table with a shuttle conveying portion provided below the receiving/delivery table. The shuttle conveying portion can be conveyed along three parallel paths. The receiving/delivery table is constituted by a number of small support plates for supporting four corners of the microplate. Each small support plate is mounted by means of a column.

### SUMMARY OF THE INVENTION

It is the object of the invention to provide a transport device with actuator modules, with a support frame and with a device for mounting said actuator modules to said support frame allowing for an easy assembly of the transport device. It is further the object of the invention to provide a laboratory sample distribution system with a transport device and a laboratory automation system comprising a laboratory sample distribution system.

This object is solved by the mounting device, the transport device, the laboratory sample distribution system and the laboratory automation system with the features of claims 1, 12, and 13. Preferred embodiments are defined in the dependent claims.

According to a first aspect, a transport device for a laboratory sample distribution system Z comprises a plurality of actuator modules (3), wherein each actuator module (3) has a regular polygonal basic shape with three, four or six corners, and wherein each actuator module (3) comprises a plurality of electro-magnetic actuators (30), a driving surface adapted to carry sample container carriers, wherein the driving surface is arranged above the electro-magnetic actuators (30), said electromagnetic actuators being adapted to move sample container carriers placed on said driving surface by applying a magnetic force to said sample containers carriers, a support frame (2) with support bars (21), and a device for mounting said plurality of actuator modules (3) in a grid pattern to said support frame (2), the device for mounting said plurality of actuator modules (3) comprising a plurality of support brackets (5) mountable to the support bars (21), wherein the corners of neighboring actuator modules (3) define nodes of the grid pattern, wherein each support bracket (5) is provided with a support structure (50) arranged at a node of the grid pattern and having a cross element (55) adapted to support corner regions of neighboring actuator modules (3) at said node, and wherein at least some of the support brackets (5) are provided with a pillar element (56) adapted to support the driving surface arranged above the electro-magnetic actuators (30). An actuator module having an at least essentially square basic shape with four corners is particularly suitable for being supported by four support brackets, each support bracket being provided with one support structure arranged at a node of a square grid pattern.

A plurality of support brackets can be mounted to support bars of a support frame in a suitable arrangement, wherein after a framework for a transport device has been built by said plurality of support brackets, the actuator modules can be mounted to said framework.

In one embodiment, the device for mounting said plurality of actuator modules comprises fixation elements adapted for fixing the support brackets adjustable in position to the support bars and at least one mounting rail for positioning and aligning at least a subset of the support brackets on one of the support bars of the support frame. For mounting the support brackets to the support bars suitable fixation elements are provided for example a slot nut to be inserted into a groove of the support bar. Prior to tightening a respective screw, the slot nut can be moved along the groove for positioning the support bracket along the support bar. The mounting rail is manufactured with high precision and allows positioning of a subset of support brackets at the support bars. In one embodiment, the mounting rails are removed after the support brackets are mounted to the support bars, wherein one mounting rail can be reused for mounting a further subset of support brackets. In other embodiments the mounting rail remains on the support frame and/or is an integral part of the support frame.

The support brackets in one embodiment each are at least essentially L-shaped in a side view comprising a supporting leg with the support structure and mounting leg for mounting the support bracket to the support frame. The L-shape is advantageous for supporting the actuator module in a position offset in vertical and horizontal direction from the support bar. The L-shaped support brackets are mounted to the support bar such that the mounting leg protrudes to a side of the support bar in a direction at least essentially perpendicular to the longitudinal axis of the support bar.

The mounting leg can be provided with a throughhole for inserting a fixation screw. In other embodiments of the support brackets, the mounting leg is provided with a slit for an insertion of a fixation screw perpendicular to a screw axis.

The support bracket in one embodiment is provided with a step in a top view so that the mounting leg is offset to the supporting leg in a direction perpendicular to a side of the support bracket, wherein in particular the mounting leg is offset to the supporting leg over a distance that equals half the width of the support bracket. The step allows aligning the support structures of two support brackets by mounting the support brackets to opposite sides of one support bar such that the mounting legs of the two support brackets abut each other.

For a precise positioning of the support structure of the support bracket in a direction perpendicular to the longitudinal direction of the support bar, in one embodiment the support bracket is provided with a stop element for limiting a movement of the support bracket towards a support bar of the support frame.

The support structure comprises a cross element for supporting adjoining corners of neighboring actuator modules. In one embodiment, the cross element comprises several fingers arranged at angles adapted to an angle of the regular basic shape of the actuator modules so that in each case one or two fingers are adapted to support one corner region of one actuator module. In case the actuator module has a triangular basic shape, six fingers arranged at angles of 60° are provided. In case the actuator module has a square basic shape, four fingers arranged at angles of 90° are provided. In case the actuator module has a hexagonal basic shape, three fingers arranged at angles of 120° are provided. The fingers in one embodiment are arranged to extend in a direction that coincides with bisectors of the supported corner regions, wherein each corner region is supported by one finger.

In other embodiments, the fingers are arranged so that in each case two fingers are adapted to support one corner region of one actuator module, wherein each finger is adapted to support the adjacent corner regions of two neighboring actuator modules. In other words, the fingers extend in parallel to sides of the actuator module adjoining the supported corner region. In one embodiment, the corner regions of the actuator modules are provided with chamfers allowing to arrange the actuator module closer to a support structure. In alternative or in addition, the support structure comprises a recess for receiving the corner region.

The driving surface and the actuator module are separate and individually mounted to the support brackets. This allows for example to mount the actuator module with less strict tolerances than the driving surface.

The driving surface in embodiments of the transport device is tiled comprising a plurality of driving surface modules, wherein each driving surface module is detachably mountable to a subset of the support brackets.

To couple the driving surface or individual driving surface elements with the support brackets, a top surface of the pillar element in one embodiment is provided with apertures adapted to receive positioning pins provided at a bottom side of a driving surface panel covering at least a subset of actuator modules or at a bottom side of driving surface modules.

At least some of the support brackets in one embodiment are provided with a cable support, in order to position and support cables and/or other media supply lines for a media supply of the transport device.

According to a second aspect, a laboratory sample distribution system is provided having a transport device and a plurality of sample container carriers, the sample container carriers each comprising at least one magnetically active device, preferably at least one permanent magnet, and being adapted to carry a sample container containing a sample. The magnetic actuators of the transport device units of the transport device are suitably driven for generating a magnetic field such that a driving force is applied to each of the sample container carriers for transporting the sample container carriers on the surface pieced together of driving surface modules of the units. The distribution system in addition in one embodiment comprises additional conveyor devices for moving a sample container carrier along a defined path.

According to a third aspect, a laboratory automation system with a plurality of pre-analytical, analytical and/or post-analytical stations, and with a distribution system having a transport device and number of sample container carriers is provided.

### BRIEF DESCRIPTION OF THE DRAWINGS

In the following, an embodiment of the invention will be described in detail with reference to the schematic drawings. Throughout the drawings, the same elements will be denoted by the same reference numerals.
- Fig. 1: is a top view of a first embodiment of a transport device comprising several actuator modules mounted to a support frame;
- Fig. 2: is a top view of a second embodiment of a transport device comprising several actuator modules mounted to a support frame;
- Fig. 3: is a top view of a support frame and a device for mounting actuator modules of a transport device of Fig. 1 or 2;
- Fig. 4: is a perspective view of a support bracket of the device of Fig. 3;
- Fig. 5: is a top view of the support bracket of Fig. 4; and
- Fig. 6: is a perspective view of the device of Fig. 3 and an actuator module;
- Fig. 7: is a top view of a detail VII of Fig. 6; and
- Fig. 8: is a perspective view of an actuator module and a driving surface module for the transport device of Fig. 1.

### DETAILED DESCRIPTION OF EMBODIMENTS OF THE INVENTION

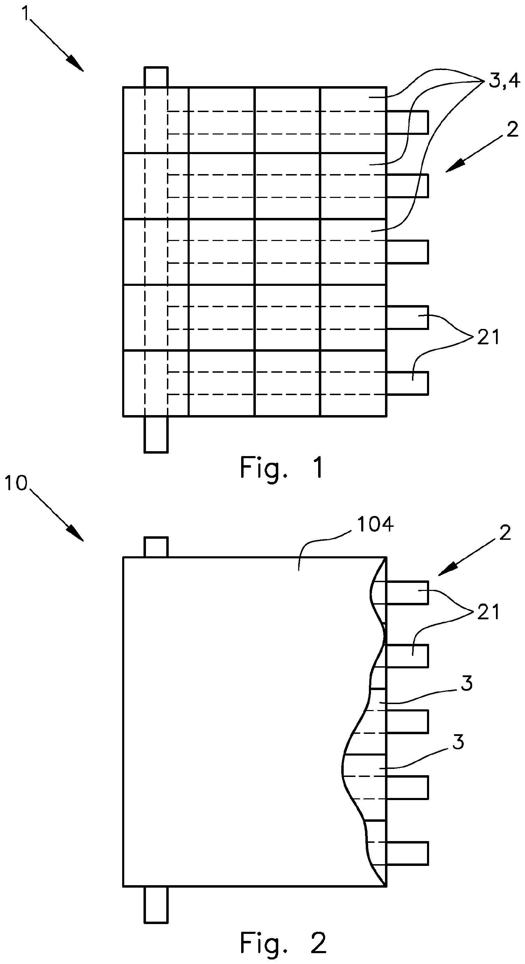

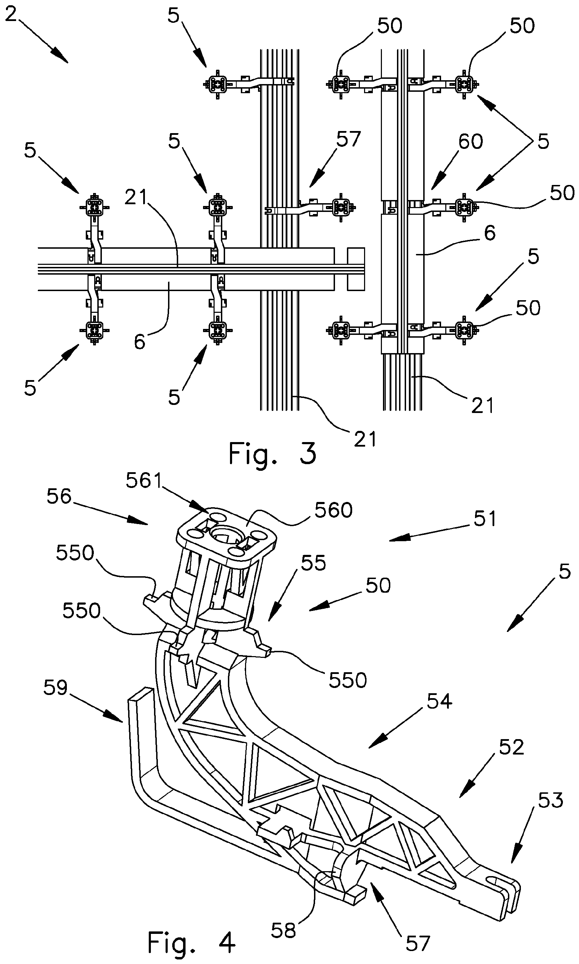

Fig. 1 schematically shows a top view of a transport device 1 comprising a support frame 2 and several, in the embodiment shown twenty actuator modules 3. The support frame 2 comprises several support bars 21. The actuator modules 3 are arranged in a grid pattern, more particular in a square grid pattern. In the embodiment shown in Fig. 1, a driving surface plane of the transport device 1 is tiled comprising several driving surface modules 4, wherein each driving surface module 4 is assigned to one actuator modules 3. The actuator modules 3 are mounted to the support frame 2. Each of the actuator modules 3 shown has a square basic shape allowing building of transport devices 1 of various designs by adding additional actuator modules 3 at either side of already existing modules 1 and/or removing actuator modules 3 from the device 1 shown in Fig. 1. Actuator modules having a square basic shape with four corners are particularly suitable for being supported by four support brackets 5 (see Fig. 3), each support bracket 5 being provided with one support structure 50 arranged at a node of a square grid pattern. In other embodiments, the actuator modules and/or the driving surface modules have a triangular basic shape or a hexagonal basic shape.

Fig. 2 schematically shows a top view of a second embodiment of a transport device 1 comprising several actuator modules 3 mounted to a support frame 2 in a grid pattern, more particular in a square grid pattern. The support frame 2 comprises support bars 21 to which the actuator modules 3 are mounted. In contrast to Fig. 1, a driving surface of the transport device 10 shown in Fig. 2 is not tiled. Instead, one driving surface panel 104 is placed on top of several actuator modules 1. In the embodiment shown in Fig. 2, the driving surface panel 104 covers all actuator modules 3 of the transport device 10.

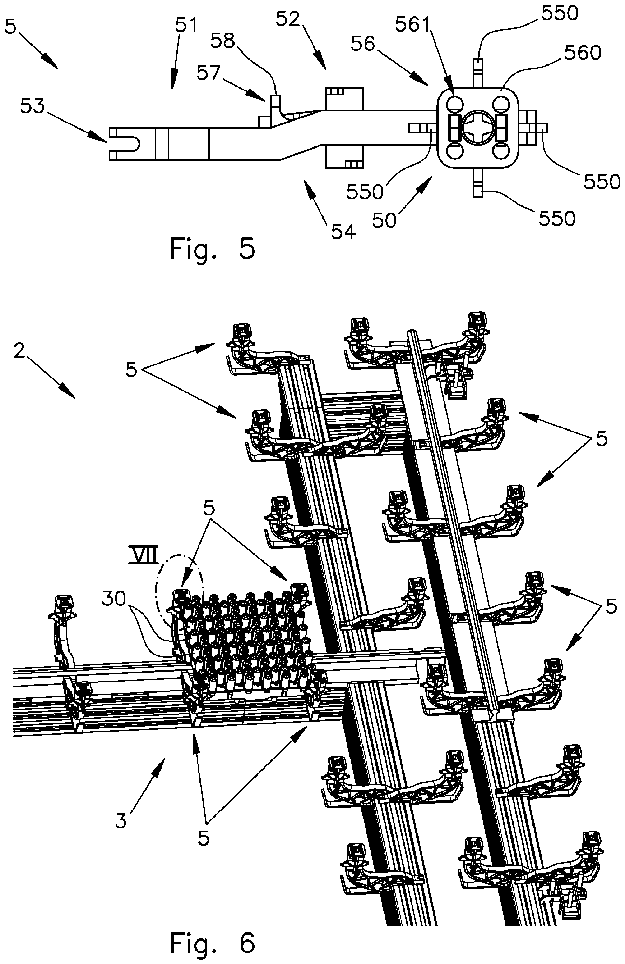

Fig. 3 is a top view of a support frame 2 with support bars 21 and a device for mounting actuator modules 3 of Fig. 1 or 2 to the support frame 2. The device comprises several support brackets 5 with support structures 50 arranged at nodes of the grid pattern. Fig. 4 and 5 show a support bracket 5 in a perspective view and a top view, respectively.

Each actuator modules 3 is supported by the support structures 50 of several support brackets 5, which support structures 50 are arranged at nodes of the grid pattern. In the embodiment shown having a square grid pattern, corners regions of up to four actuator modules 3 are supported using one support bracket 5. The number of actuator modules 3 coupled by one support bracket 5 depends on the basic shape of the actuator module 3, and, hence the pattern in which the actuator modules 3 are arranged. In case the actuator modules to be supported have a triangular basic shape, corners regions of up to six actuator modules are supported using one support bracket 5. In case the actuator modules to be supported have a hexagonal basic shape, corners regions of up to three actuator modules are supported using one support bracket 5.

The support brackets 5 are mounted to the support bars 21 for example by using slot nuts (not shown). In order to simplify a positioning of each support bracket 5 along the support bars 21 and to align a plurality of support brackets 5, the device comprises mounting rails 6.

As best seen in Fig. 4, the support bracket 5 is essentially L-shaped seen in a side view comprising a supporting leg 51 with the support structure 50 and mounting leg 52 for mounting the support bracket 5 to one support bar 21. As shown in Fig. 3, the L-shaped support brackets 5 are mounted to the support bars 21 such that the mounting leg 52 protrudes to a side of the support bar 21 in a direction at least essentially perpendicular to the longitudinal axis of the support bar 21. The supporting leg 51 protrudes in an at least essentially vertical direction.

At a distal end of the mounting leg 52, a slit 53 is provided for receiving a screw or bolt (not shown) for mounting the support bracket 5 to the support bar 21 (see Fig. 3). In other embodiments, a throughhole is provided. Providing a slit 53 instead of a throughhole allows approaching of the support bracket 5 from a direction perpendicular to the support bars 21 and perpendicular to an axis of the screw or bolt. A movement of the support bracket 5 towards the support bar 21 is limited by a stop element 57.

As best seen in Fig. 5, the mounting leg 52 is provided with a step 54, so that the mounting leg 52 and the supporting leg 51 are offset in an axial direction of the support bar 21. The offset is about half the width of the support bracket 5. This allows aligning the support structures 50 of two abutting supporting brackets 5 arranged at opposite sides of a support bar 21 in the longitudinal direction of the support bar 21.

As best seen in Fig. 3, in the embodiment shown the mounting rail 6 is provided with slits 60 having a width that is twice the width of the support bracket 5. Two abutting support bracket 5 are inserted in one slit 60 of the mounting rail 6 from opposite sides of the support bar 21 with the mounting leg 52 of each support bracket 5 abutting one side wall of the slit 60 and the two support legs 51 being arranged centered in the slit 60. Further, as shown in Fig. 3, it is also possible to insert only one support bracket 5 in one slit 60. In case no second support bracket 5 is inserted into one slit 60, an incorrect positioning or tilting of the support bracket 5 is prevented by means of the stop element 57. For this purpose, the stop element 57 is provided with a wing element 58 protruding from a side of the support bracket 5 over a distance equal to the width of the support bracket 5.

At the distal end of the supporting leg 51, the support structure 50 is provided. The support structure 50 comprises a cross element 55 with several fingers 550 adapted to support corners of actuator modules 3 at a respective node. In the embodiment shown, square actuator modules 3 arranged in a square grid pattern are provided. Hence, the cross element 55 has four fingers 550 arranged at angles of 90° to each other. In the embodiment shown, each corner region of an actuator module 3 is supported by two fingers 550, which fingers 550 in each case extend in parallel to the two adjacent sides of neighboring actuator modules 3. Each finger 550 is adapted to support two neighboring actuator modules 3 at their adjacent sides. In other embodiments not shown, the four fingers are each arranged to support one corner region of one actuator module and extend in the direction of a bisector of the corner region.

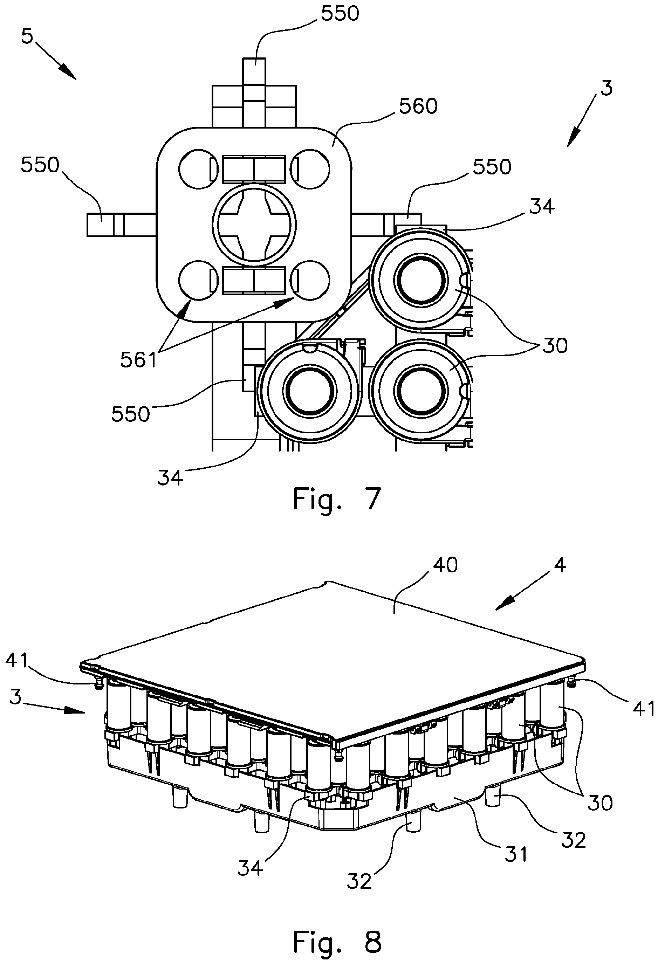

The support structure 50 is further provided with a pillar element 56 having planar top surface 560 adapted to support a driving surface 104 spanning several actuator modules 3 (see Fig. 2) or a driving surface module 4 (see Fig. 1). At the planar top surface 560 four apertures 561 are provided adapted for receiving positioning pins (41, see Fig. 7) provided at corners of the driving surface modules 4. In case of triangular driving surface modules, the corner supports are provided with six apertures. In case of hexagonal driving surface modules, the corner supports are provided with three apertures.

The support bracket 5 shown is further provided with a cable support 59. The cable support 59 allows to position and support cables and/or other media supply lines (not shown) for a media supply of the actuator module 3 and/or other elements of the transport device. In the embodiment shown, the cable support 59 is arranged below the supporting leg 51 and extends essentially in parallel to the supporting leg 51.

Fig. 6 shows the support structure 2 of Fig. 3, wherein one actuator module 3 comprising a number of electro-magnetic actuators 30 is mounted to four support brackets 5. Fig. 7 shows a detail VII of Fig. 6 in a top view.

As best seen in Fig. 7, in the embodiment shown a grid structure 34 of the actuator module 3 rests on two fingers 550 arranged at an angle of 90° to each other. Each finger 550 is adapted to support an additional actuator module 3 (not shown), which could be arranged adjacent to either one of the side faces of the actuator module 3 shown. In the embodiment shown, the corner region of the actuator module 3 is provided with a chamfer allowing to arrange the actuator module 3 close to the support structure 50. Further, the corner region is partly received in a recess provided in the pillar element 56 underneath the top surface 560.

The pillar element 56 is longer than the actuators 30 so that the top surface 560 adapted for supporting a driving surface or driving surface modules 3 is arranged above the upper end of the actuators 30.

One actuator module 3 together with a driving surface module 4 is shown in more detail in Fig. 8.

The actuator module 3 shown has an essentially square basic shape with four equal sides and four corners. It is adapted to be mounted to the support brackets 5, wherein in the embodiment shown the corners of the actuator module 3 are chamfered. The corners of the driving surface module 4 are not chamfered for providing a gapless driving surface.

The actuator module 3 comprises a carrier element 31 with stands 32 protruding from the bottom surface. The actuator module 3 is placed on the stands 32 for example during transport, for storage and/or for an assembly.

In the embodiment shown, the actuator module 3 comprises a grid structure 34 made of a magnetically conductive material, in particular a metal, wherein the actuators 30 are mounted to the grid structure 34. The grid structure 34 is a rigid structure. In the embodiment shown the grid structure 34 is further used for supporting the actuator module 3 on the support brackets 5 (see Fig. 7).

In the embodiment shown, one driving surface module 4 is provided on top of each actuator module 3 with a driving surface element 40 made of a material suitable for slidingly transporting sample carriers (not shown) along the top surface of the driving surface element 40. The driving surface element 40 has an essentially square basic shape with four sides of equal length and four corners. The dimension of the driving surface module 4 is at least essentially the same than that of the actuator module 3.

At the four corners of the driving surface module 4, connection pins 41 are provided for mounting the driving surface module 4 via the support brackets 5 to the support frame 2 (see Fig. 3). The connection pins 41 are adapted to be inserted into the apertures 561 provided at the top surface 560 of the support brackets 5. Hence, several driving surface modules 4 are aligned by means of the support brackets 5.

It will be apparent that the embodiments shown are only exemplary and that various modifications can be made in construction and arrangement within the scope of the invention as defined in the appended claims.

## Claims

1. Transport device for a laboratory sample distribution system comprising
a plurality of actuator modules (3), wherein each actuator module (3) has a regular polygonal basic shape with three, four or six corners, and wherein each actuator module (3) comprises a plurality of electro-magnetic actuators (30),
a driving surface adapted to carry sample container carriers, wherein the driving surface is arranged above the electro-magnetic actuators (30), said electro-magnetic actuators (30) being adapted to move sample container carriers placed on said driving surface by applying a magnetic force to said sample containers carriers,
a support frame (2) with support bars (21), and
a device for mounting said plurality of actuator modules (3) in a grid pattern to said support frame (2), the device for mounting said plurality of actuator modules (3) comprising a plurality of support brackets (5) mountable to the support bars (21),
wherein the corners of neighboring actuator modules (3) define nodes of the grid pattern,
wherein each support bracket (5) is provided with a support structure (50) arranged at a node of the grid pattern and having a cross element (55) adapted to support corner regions of neighboring actuator modules (3) at said node, and
wherein at least some of the support brackets (5) are provided with a pillar element (56) adapted to support the driving surface arranged above the electro-magnetic actuators (30).

2. The transport device according to claim 1, wherein the device for mounting said plurality of actuator modules (3) comprises fixation elements adapted for fixing the support brackets (5) adjustable in position to the support bars (21) and at least one mounting rail (6) for positioning and aligning at least a subset of the support brackets (5) on one of the support bars (21) of the support frame (2).

3. The transport device according to claim 1 or 2, wherein at least some of the support brackets (5) are at least essentially L-shaped in a side view comprising a supporting leg (51) with the support structure (50) and mounting leg (52) for mounting the support bracket (5) to the support frame (2).

4. The transport device according to claim 3, wherein the mounting leg (52) is provided with a slit (53) for an insertion of a fixation screw perpendicular to a screw axis.

5. The transport device according to claim 3 or 4, wherein at least some of the support brackets (5) are provided with a step (54) in a top view so that the mounting leg (52) is offset to the supporting leg (51) in a direction perpendicular to a side of the support bracket (5), wherein in particular the mounting leg (52) is offset to the supporting leg (51) over a distance that equals half the width of the support bracket (5).

6. The transport device according to any one of claims 1 to 5, wherein at least some of the support brackets (5) are provided with a stop element (57) for limiting a movement of the support bracket (5) towards a support bar (21) of the support frame (2).

7. The transport device according to any one of claims 1 to 6, wherein the cross element (55) of at least some of the support brackets (5) comprises several fingers (550) arranged at angles adapted to an angle of the regular basic shape of the actuator modules (3) so that in each case one or two fingers are adapted to support one corner region of one actuator module (3).

8. The transport device according to claim 7, wherein the fingers (550) are arranged so that in each case two fingers are adapted to support one corner region of one actuator module (3), wherein each finger (550) is adapted to support the adjacent corner regions of two neighboring actuator modules (3).

9. The transport device according to any one of claims 1 to 8, wherein the driving surface is tiled comprising a plurality of driving surface modules (4), wherein each driving surface module (4) is detachably mountable to a subset of the support brackets (5).

10. The transport device according to any one of claims 1 to 9, wherein a top surface (560) of the pillar element (56) is provided with apertures (561) adapted to receive connection pins (41) provided at a bottom side of a driving surface panel (104) or at a bottom side of driving surface modules (4).

11. The transport device according to any one of claims 1 to 10, wherein at least some of the support bracket (5) are provided with a cable support (59).

12. Laboratory sample distribution system having a transport device (10) according to any one of claims 1 to 11 and a plurality of sample container carriers, the sample container carriers each comprising at least one magnetically active device, preferably at least one permanent magnet, and being adapted to carry a sample container containing a sample.

13. Laboratory automation system with a plurality of pre-analytical, analytical and/or post-analytical stations, and with a distribution system according to claim 12.

## Patentansprüche

1. Transportvorrichtung für ein Laborprobenverteilungssystem, umfassend
eine Vielzahl von Aktuatormodulen (3), wobei jedes Aktuatormodul (3) eine regelmäßige polygonale Grundform mit drei, vier oder sechs Ecken aufweist und wobei jedes Aktuatormodul (3) eine Vielzahl von elektromagnetischen Aktuatoren (30) umfasst,
eine Antriebsfläche, die dafür ausgelegt ist, Probenbehälterträger zu tragen, wobei die Antriebsfläche über den elektromagnetischen Aktuatoren (30) angeordnet ist, wobei die elektromagnetischen Aktuatoren (30) dafür ausgelegt sind, Probenbehälterträger, die auf der Antriebsfläche platziert sind, zu bewegen, indem sie eine Magnetkraft auf die Probenbehälterträger ausüben,
einen Halterahmen (2) mit Haltestangen (21) und
eine Vorrichtung zum Befestigen der Vielzahl von Aktuatormodulen (3) in einem Gittermuster an dem Halterahmen (2), wobei die Vorrichtung zum Befestigen der Vielzahl von Aktuatormodulen (3) eine Vielzahl von Haltebügeln (5) umfasst, die an den Haltestangen (21) befestigbar sind,
wobei die Ecken benachbarter Aktuatormodule (3) Knoten des Gittermusters definieren,
wobei jeder Haltebügel (5) mit einer Haltekonstruktion (50) versehen ist, die an einem Knoten des Gittermusters angeordnet ist und ein Kreuzelement (55) aufweist, das dafür ausgelegt ist, Eckregionen benachbarter Aktuatormodule (3) an dem Knoten zu halten, und
wobei zumindest einige der Haltebügel (5) mit einem Stützelement (56) versehen sind, das dafür ausgelegt ist, die über den elektromagnetischen Aktuatoren (30) angeordnete Antriebsfläche zu halten.

2. Transportvorrichtung nach Anspruch 1, wobei die Vorrichtung zum Befestigen der Vielzahl von Aktuatormodulen (3) Fixierungselemente, die dafür ausgelegt sind, die Haltebügel (5) positionsverstellbar an den Haltestangen (21) zu fixieren, und mindestens eine Befestigungsschiene (6) zum Positionieren und Ausrichten mindestens einer Teilmenge der Haltebügel (5) an einer der Haltestangen (21) des Halterahmens (2) umfasst.

3. Transportvorrichtung nach Anspruch 1 oder 2, wobei zumindest einige der Haltebügel (5) in einer Seitenansicht zumindest im Wesentlichen L-förmig sind und einen Haltschenkel (51) mit der Haltekonstruktion (50) und dem Befestigungsschenkel (52) zum Befestigen des Haltebügels (5) an dem Halterahmen (2) umfassen.

4. Transportvorrichtung nach Anspruch 3, wobei der Befestigungsschenkel (52) mit einem Schlitz (53) zum Einführen einer Fixierungsschraube senkrecht zu einer Schraubenachse versehen ist.

5. Transportvorrichtung nach Anspruch 3 oder 4, wobei zumindest einige der Haltebügel (5) in einer Draufsicht mit einer Stufe (54) versehen sind, sodass der Befestigungsschenkel (52) in einer Richtung senkrecht zu einer Seite des Haltebügels (5) versetzt zu dem Halteschenkel (51) ist, wobei insbesondere der Befestigungsschenkel (52) über eine Strecke, die gleich der Hälfte der Breite des Haltebügels (5) ist, versetzt zu dem Halteschenkel (51) ist.

6. Transportvorrichtung nach einem der Ansprüche 1 bis 5, wobei zumindest einige der Haltebügel (5) mit einem Stoppelement (57) zum Begrenzen einer Bewegung des Haltebügels (5) in Richtung einer Haltestange (21) des Halterahmens (2) versehen sind.

7. Transportvorrichtung nach einem der Ansprüche 1 bis 6, wobei das Kreuzelement (55) der zumindest einigen Haltebügel (5) mehrere Finger (550) umfasst, die in Winkeln angeordnet sind, die an einen Winkel der regelmäßigen Grundform der Aktuatormodule (3) angepasst sind, sodass in jedem Fall ein oder zwei Finger dafür ausgelegt sind, eine Eckregion eines Aktuatormoduls (3) zu halten.

8. Transportvorrichtung nach Anspruch 7, wobei die Finger (550) so angeordnet sind, dass in jedem Fall zwei Finger dafür ausgelegt sind, eine Eckregion eines Aktuatormoduls (3) zu halten, wobei jeder Finger (550) dafür ausgelegt ist, die angrenzenden Eckregionen von zwei benachbarten Aktuatormodulen (3) zu halten.

9. Transportvorrichtung nach einem der Ansprüche 1 bis 8, wobei die Antriebsfläche gekachelt ist und eine Vielzahl von Antriebsflächenmodulen (4) umfasst, wobei jedes Antriebsflächenmodul (4) lösbar an einer Teilmenge der Haltebügel (5) befestigt ist.

10. Transportvorrichtung nach einem der Ansprüche 1 bis 9, wobei eine Oberfläche (560) des Stützelements (56) mit Öffnungen (561) versehen ist, die dafür ausgelegt sind, Verbindungsstifte (41) aufzunehmen, die an einer Unterseite einer Antriebsflächenebene (104) oder an einer Unterseite von Antriebsflächenmodulen (4) vorgesehen sind.

11. Transportvorrichtung nach einem der Ansprüche 1 bis 10, wobei zumindest einige der Haltebügel (5) mit einem Kabelhalter (59) versehen sind.

12. Laborprobenverteilungssystem mit einer Transportvorrichtung (10) nach einem der Ansprüche 1 bis 11 und einer Vielzahl von Probenbehälterträgern, wobei die Probenbehälterträger jeweils mindestens eine magnetisch wirkende Vorrichtung, vorzugsweise mindestens einen Dauermagnet, umfassen und dafür ausgelegt sind, einen eine Probe enthaltenden Probenbehälter zu tragen.

13. Laborautomatisierungssystem mit einer Vielzahl von Voranalyse-, Analyse- und/oder Nachanalysestationen und mit einem Verteilungssystem nach Anspruch 12.

## Revendications

1. Dispositif de transport pour un système de distribution d'échantillons en laboratoire comprenant
une pluralité de modules d'actionneurs (3), dans lequel chaque module d'actionneurs (3) a une forme de base polygonale régulière ayant trois, quatre ou six coins, et dans lequel chaque module d'actionneurs (3) comprend une pluralité d'actionneurs électromagnétiques (30),
une surface d'entraînement adaptée pour transporter des porte-récipients d'échantillons, dans lequel la surface d'entraînement est disposée au-dessus des actionneurs électromagnétiques (30), lesdits actionneurs électromagnétiques (30) étant adaptés pour déplacer les porte-récipients d'échantillons placés sur ladite surface d'entraînement par application d'une force magnétique auxdits porte-récipients d'échantillons,
un cadre de support (2) avec des barres de support (21), et
un dispositif pour monter ladite pluralité de modules d'actionneurs (3) en motif de grille sur ledit cadre de support (2), le dispositif pour monter ladite pluralité de modules d'actionneurs (3) comprenant une pluralité de paliers de support (5) pouvant être montés sur les barres de support (21),
dans lequel les coins des modules d'actionneurs (3) voisins définissent des noeuds du motif en grille,
dans lequel chaque palier de support (5) est pourvu d'une structure de support (50) agencée au niveau d'un noeud du motif en grille et ayant un élément en croix (55) adapté pour supporter des régions de coin des modules d'actionneurs (3) voisins au niveau dudit nœud, et
dans lequel au moins certains des paliers de support (5) sont pourvus d'un élément de colonne (56) adapté pour supporter la surface d'entraînement agencée au-dessus des actionneurs électromagnétiques (30).

2. Dispositif de transport selon la revendication 1, dans lequel le dispositif pour monter ladite pluralité de modules d'actionneurs (3) comprend des éléments de fixation adaptés pour fixer les paliers de support (5) ajustables en position aux barres de support (21) et au moins un rail de montage (6) pour positionner et aligner au moins un sous-ensemble des paliers de support (5) sur l'une des barres de support (21) du cadre de support (2).

3. Dispositif de transport selon la revendication 1 ou 2, dans lequel au moins certains des paliers de support (5) sont au moins essentiellement en forme de L dans une vue latérale comprenant une patte de support (51) avec la structure de support (50) et une patte de montage (52) pour monter le palier de support (5) sur le cadre de support (2).

4. Dispositif de transport selon la revendication 3, dans lequel la patte de montage (52) est pourvue d'une fente (53) pour une insertion d'une vis de fixation perpendiculaire à un axe de vis.

5. Dispositif de transport selon la revendication 3 ou 4, dans lequel au moins certains des paliers de support (5) sont pourvus d'une marche (54) dans une vue de dessus de sorte que la patte de montage (52) est décalée de la patte de support (51) dans une direction perpendiculaire à un côté du palier de support (5), dans lequel en particulier la patte de montage (52) est décalée de la patte de support (51) sur une distance égale à la moitié de la largeur du palier de support (5).

6. Dispositif de transport selon l'une quelconque des revendications 1 à 5, dans lequel au moins certains des paliers de support (5) sont pourvus d'un élément d'arrêt (57) pour limiter un mouvement du palier de support (5) vers une barre de support (21) du cadre de support (2).

7. Dispositif de transport selon l'une quelconque des revendications 1 à 6, dans lequel l'élément en croix (55) d'au moins certains des paliers de support (5) comprend plusieurs doigts (550) agencés à des angles adaptés à un angle de la forme de base régulière des modules d'actionneurs (3) de sorte que dans chaque cas un ou deux doigts sont adaptés pour supporter une région de coin d'un module d'actionneurs (3).

8. Dispositif de transport selon la revendication 7, dans lequel les doigts (550) sont agencés de sorte que dans chaque cas deux doigts sont adaptés pour supporter une région de coin d'un module d'actionneurs (3), dans lequel chaque doigt (550) est adapté pour supporter les régions de coin adjacentes de deux modules d'actionneurs (3) voisins.

9. Dispositif de transport selon l'une quelconque des revendications 1 à 8, dans lequel la surface d'entraînement est revêtue comprenant une pluralité de modules de surface d'entraînement (4), dans lequel chaque module de surface d'entraînement (4) est monté de manière détachable sur un sous-ensemble des paliers de support (5).

10. Dispositif de transport selon l'une quelconque des revendications 1 à 9, dans lequel une surface supérieure (560) de l'élément de colonne (56) est pourvue d'ouvertures (561) adaptées pour recevoir des broches de connexion (41) fournies au niveau d'un côté inférieur d'un panneau de surface d'entraînement (104) ou au niveau d'un côté inférieur des modules de surface d'entraînement (4).

11. Dispositif de transport selon l'une quelconque des revendications 1 à 10, dans lequel au moins certains des paliers de support (5) sont pourvus d'un support de câble (59).

12. Système de distribution d'échantillons en laboratoire ayant un dispositif de transport (10) selon l'une quelconque des revendications 1 à 11 et une pluralité de porte-récipients d'échantillons, les porte-récipients d'échantillons comprenant chacun au moins un dispositif magnétiquement actif, préférentiellement au moins un aimant permanent, et étant adaptés pour transporter un récipient d'échantillon contenant un échantillon.

13. Système d'automatisation de laboratoire avec une pluralité de stations pré-analytiques, analytiques et/ou post-analytiques, et avec un système de distribution selon la revendication 12.
